# FASCICULE DE BREVET EUROPEEN

(11) **EP 3 035 130 B1**
(45) Date de publication et mention de la délivrance du brevet: **02.03.2022**
(21) Numéro de dépôt: 14199501.9
(22) Date de dépôt: 19.12.2014
(51) Int. Cl.: G04B 45/00, G04D 3/00, G04B 5/16, G04B 45/04, G04B 19/12, G04B 19/04, C23D 5/06, C23C 24/10, B44C 3/10, B44C 1/22, B22F 5/00, B22F 3/24, B22F 10/20, B05D 5/06

(54) **Procédé de réalisation d'un élément décoré d'une pièce d'horlogerie ou de bijouterie, et élément réalise par le procédé**
Herstellungsverfahren eines Dekorelements für eine Uhr oder ein Schmuckstück, und mit diesem Verfahren hergestelltes Element
Method for producing a decorated element of a timepiece or piece of jewellery, and element produced by the method

(43) Date de publication de la demande: 22.06.2016
(73) Titulaire: Omega SA, 2502 Bienne (CH)
(72) Inventeur: Kissling, Gregory, 2532 Macolin (CH); Lauper, Stéphane, 2016 Cortaillod (CH); Uldry, Igor-Emmanuel, 2016 Cortaillod (CH); Stranczl, Marc, 1260 Nyon (CH); Kinkio, Stéphane, 2516 Lamboing (CH); Hostettler, Sébastien, Sonceboz 2605 (CH); Bürli, Gilliane, 2525 Le Landeron (CH)
(74) Mandataire: Collé, Emmanuel

(56) Documents cités:
- EP-A1- 0 453 382
- EP-A1- 2 316 299
- EP-A2- 2 806 315

## Description

L'invention concerne un procédé de réalisation d'au moins un élément décoré d'une pièce d'horlogerie ou de bijouterie.

L'invention concerne également l'élément décoré obtenu selon le procédé de réalisation.

Pour décorer un élément ou composant d'une pièce d'horlogerie ou de bijouterie, il peut être utilisé une technique d'émaillage à chaud après avoir réalisé notamment un ensemble de cloisons sur l'élément ou sur le composant. La technique traditionnelle dite cloisonnée fait partie des nombreuses techniques d'émaillage, qui comprennent entre autre la grisaille, l'appliqué à sec, la peinture sur émail, le champlevé, la basse taille, le plique à jour, l'émail en relief, le paillonné pour en citer les principales. Le principe de cette technique artisanale de décoration consiste à créer manuellement un motif constitué de cloisons en fil métallique, puis de le remplir de couches successives d'émaux de différentes couleurs, transparents ou opaques sur un support métallique ou céramique. Les matières premières de la substance vitreuse dite émail, sont principalement la silice sous forme de sable très pur, les feldspaths, les pegmatites, la craie, la chaux, et, parfois, des kaolins, associés à des composants métalliques pour lui donner sa couleur. Cette substance déposée sur une surface du composant, est cuite jusqu'à sa fusion et adhérence sur le composant métallique ou céramique. La réalisation du décor par diverses étapes manuelles est longue et ne peut être reproduite de manière identique d'un composant à l'autre, ce qui constitue un inconvénient.

Dans le cas de la technique du cloisonné, il doit être compté généralement au moins neuf étapes de réalisation de l'élément décoré. Dans une première étape, il doit être élaboré le dessin du motif directement sur papier ou sur ordinateur avec impression du dessin à taille réelle. Dans une seconde étape, on effectue une fabrication à la main des motifs du décor au moyen d'un fil métallique sur le dessin comme base. Dans une troisième étape, il y a une reproduction du dessin sur un support métallique ou céramique notamment par gravure main, gravure machine ou à main levée. Dans une quatrième étape, le support métallique ou céramique est émaillé d'une première couche d'émail transparent. Dans une cinquième étape, il est effectué un placement des motifs du décor sur le support céramique ou métallique émaillé pour la formation des motifs cloisonnés. Dans une sixième étape, un collage des motifs de décor est effectué sur le support métallique ou céramique pour faire tenir les cloisons. Dans une sixième étape, on met à niveau les motifs de décor fixés sur le support céramique ou métallique. La septième étape consiste à cuire le support émaillé avec les cloisons collées, afin que celles-ci s'emprisonnent dans l'émail à sa fusion pour obtenir des cloisons solides et rigidifiées. Dans la huitième étape il est effectué l'opération d'émaillage généralement en plusieurs poses et plusieurs cuissons. La neuvième étape est de lapider et polir la pièce émaillée. Cela constitue un très grand nombre d'étapes pour un tel procédé de réalisation d'un élément décoré, ce qui est un inconvénient.

Il est encore à noter que plusieurs problèmes subsistent en relation à la technique susmentionnée pour réaliser un élément décoré. Ces problèmes sont d'une part la fabrication manuelle des décors, leur géométrie, leur placement et leur tenue. Les décors sont des fils métalliques ou des bandes métalliques pliées avec des formes géométriques simples. Les fils ou bandes sont maintenus ensemble par collage, ce qui a l'inconvénient de n'être pas rigide ou étanche.

Dans la demande de brevet CH 707 533 A2, il est décrit un procédé de fabrication d'un cadran de montre décoré avec une broderie. Il est effectué tout d'abord une gravure par décalque dans un canevas en tissu. Une fois le calque percé selon le motif souhaité, une poudre est étalée sur le calque. Une impression du motif sur le canevas est ensuite effectuée pour mettre en évidence le motif pour l'opération de broderie, qui suit cette étape d'impression. Une fois la broderie terminée, le canevas décoré est collé sur un support, tel qu'un cadran de montre. Ce procédé comporte également un très grand nombre d'étapes pour décorer le cadran de montre, ce qui est un inconvénient. De plus, il ne peut pas être réalisé une décoration de forme complexe avec ce procédé.

La demande de brevet EP 2 316 299 A1 décrit une pièce d'horlogerie ou de bijouterie et son procédé de fabrication. La pièce comprend une structure de base en métal, qui est munie d'un décor en relief, et d'une couche en élastomère déposée sur une surface de la structure par l'intermédiaire d'une couche d'adhésion.

La demande de brevet EP 2 806 315 A2 décrit la réalisation d'un composant de montre, tel qu'un affichage ou cadran coloré. Pour ce faire, il est utilisé une plaquette de silicium opaque en tant que base sur laquelle, il est déposé un premier film fin de nitrure de silicium. Un masque de résine photosensible est disposé sur le premier film pour une opération de photolithographie. Des parties de la résine illuminées sont retirées et une gravure du premier film intervient. Par la suite, un dépôt d'une couche métallique ou céramique est effectué.

L'invention a donc pour but de proposer un procédé de réalisation d'un élément décoré d'une pièce d'horlogerie ou de bijouterie en palliant les inconvénients de l'état de la technique susmentionné pour faciliter la fabrication d'un tel élément décoré et sa reproductibilité.

A cet effet, l'invention concerne un procédé de réalisation d'un élément décoré d'une pièce d'horlogerie ou de bijouterie, qui comprend les caractéristiques mentionnées dans la revendication indépendante 1.

Des étapes particulières du procédé de réalisation d'un élément décoré sont définies dans les revendications dépendantes 2 à 10.

Un avantage du procédé de réalisation d'un élément décoré réside dans le fait qu'il est possible de réaliser des décors tridimensionnels de formes complexes. Les décors peuvent être fabriqués directement sur un objet métallique, céramique ou céramo-métallique, tel que cermet, et de manière industrielle. Pour améliorer l'adhérence avec le décor, les objets peuvent être traités d'une couche métallique ou céramique ou cermet de la même famille que les matériaux du décor. Préalablement, lesdits décors sont dessinés ou programmés sur ordinateur, ce qui permet de réaliser des volumes très complexes et reproductibles. Cela permet de réduire le nombre d'étapes de réalisation dudit élément décoré. Dans le cas de la technique du cloisonné, il peut n'y avoir plus que cinq étapes de réalisation et les cloisons réalisées sont étanches.

Un avantage du procédé de réalisation de l'élément décoré réside dans le fait, qu'il peut être obtenu les cloisons ou parois ou moule sur un substrat de base par une technologie de frittage sélectif ou fusion sélective par laser ou par faisceau d'électrons par exemple d'au moins une poudre métallique ou céramique ou céramo-métallique, tel que cermet. Le terme fusion est associée aux poudres métalliques, alors que le terme frittage est associé aux poudres céramiques ou céramo-métalliques. Une fois les cloisons métalliques ou céramiques ou céramo-métalliques réalisées sur le substrat de base, un matériau de remplissage, tel que de l'émail est inséré dans les cloisons pour une opération d'émaillage. Il peut être utilisé, pour certaines applications utilisées pour les techniques d'émaillage à froid, un polymère thermodurcissable muni de pigments de couleur. Ce type de polymère peut être une résine du type époxy.

Avantageusement, il peut être utilisé également une technologie du type LIGA sur un substrat métallique ou semi-conducteur, tel que silicium pour réaliser les cloisons ou parois ou moule sur le substrat de base avant d'insérer le matériau de remplissage, qui peut être de l'émail ou un polymère ou un alliage métallique ou céramique ou un cermet. Par la suite, il peut être retiré le substrat de base pour obtenir l'élément décoré, qui ne comprend que les cloisons et le matériau de remplissage coloré disposé entre les cloisons.

Avantageusement, une fois que le matériau de remplissage est inséré partiellement ou entièrement dans les cloisons ou le moule, il peut encore être effectué une ou plusieurs opérations supplémentaires de frittage sélectif ou fusion sélective avec de la poudre pour obtenir un décor tridimensionnel piégé ou non dans le matériau de remplissage.

A cet effet, l'invention concerne également un élément décoré obtenu selon le procédé de réalisation de l'élément décoré, qui comprend les caractéristiques mentionnées dans la revendication indépendante 11.

Des formes particulières de l'élément décoré sont définies dans les revendications dépendantes 12 et 13.

Les buts, avantages et caractéristiques du procédé de réalisation d'un élément décoré d'une pièce d'horlogerie ou de bijouterie, ainsi que l'élément décoré obtenu apparaîtront mieux dans la description suivante en regard des dessins sur lesquels :
la figure 1 représente de manière simplifiée une machine de frittage sélectif ou fusion sélective pour la réalisation de cloisons ou parois sur un élément de pièce de montre ou de bijouterie selon l'invention,
la figure 2 représente un élément de pièce de montre ou de bijouterie avec des cloisons ou parois réalisées selon l'invention, et
la figure 3 représente un élément de pièce de montre ou de bijouterie après l'opération d'émaillage selon l'invention.

Dans la description suivante toutes les techniques de réalisation des motifs de décoration d'un élément de montre ou de bijouterie, qui sont bien connues dans l'état de la technique, ne seront relatées que de manière simplifiée. Les motifs de décoration concernent des cloisons ou parois ou moule déposés sur un substrat de base par des techniques définies comme des techniques de micro-usinage.

De préférence, l'invention concerne particulièrement l'industrialisation de certaines étapes des techniques du cloisonné et du plique à jour en volume. Avec ces deux techniques, il est possible par exemple d'émailler un motif en volume en créant préalablement des cloisons en fils ou bandes métalliques. Ces cloisons sont de préférence placées sur un substrat de base, qui peut être métallique ou un autre matériau indiqué ci-après.

Le procédé de réalisation d'un élément décoré pour une montre ou un bijou comprend une première étape essentielle de réalisation des cloisons ou parois ou moule sur le substrat de base par une technique de micro-usinage. Le substrat de base peut être un matériau métallique cristallin ou amorphe, une céramique, un semi-conducteur, un cermet, ou tout autre matériau. Concernant la céramique, cela concerne l'alumine, la zircone, la magnésie, le nitrure de bore, le nitrure de silicium, le carbure de silicium, le titanate d'aluminium et le nitrure d'aluminium, ou d'autres types de céramique. Il peut même être prévu d'avoir un substrat de base en quartz, en verre, en saphir, en corindon ou autre type de pierre précieuse. Le matériau du moule ou des cloisons peut être le même que celui du substrat de base. Dans le cas d'une opération d'émaillage suivant la première étape, il est nécessaire que le matériau utilisé du substrat de base et celui des cloisons supporte la cuisson au four lors de l'émaillage.

Les motifs de décoration définis par les cloisons sont dessinés ou programmés préalablement sur ordinateur, et les données mémorisées du dessin ou motif sont transmises à la machine de micro-usinage pour la réalisation desdites cloisons. Par la suite, il est encore effectué une opération pour remplir les cloisons d'un matériau de remplissage, qui peut être un polymère thermodurcissable, un alliage métallique, une céramique, un cermet ou de préférence de l'émail muni de pigments de couleur. L'émail peut être déposé ou fixé à chaud ou à froid. Dans le cas d'une opération d'émaillage, cette opération est expliquée brièvement ci-après.

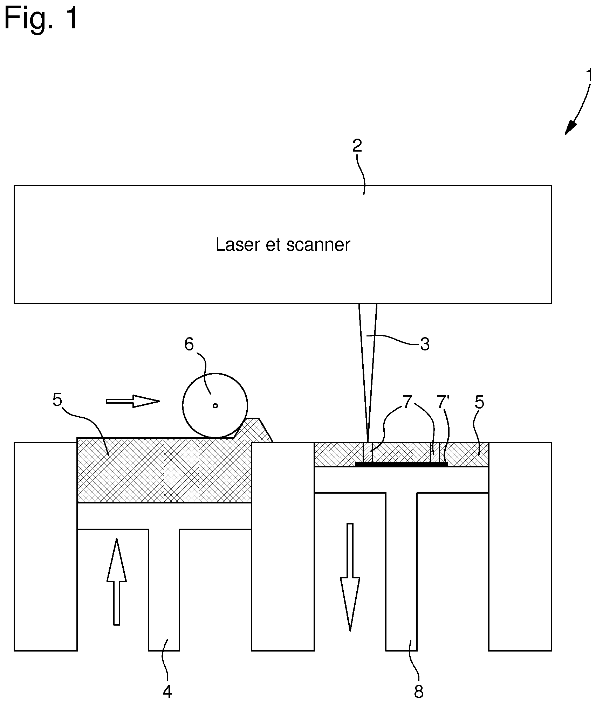

A la figure 1, il est représenté une des techniques de réalisation de cloisons, parois ou moule sur un substrat de base d'un élément de montre ou de bijouterie. Cette technique est le frittage sélectif ou la fusion sélective par laser d'une poudre notamment métallique, céramique ou céramo-métallique sur le substrat de base. La poudre métallique peut être de l'acier, du nickel, du nickel-chrome, du nickel-chrome-molybdène, du titane, du cuivre, de l'or ou un autre métal ou alliage métallique. Ce type de matériau métallique doit avoir normalement un point de fusion plus élevé que celui de l'émail, si une opération d'émaillage est effectuée par la suite.

La machine de fusion sélective ou frittage sélectif 1 comprend essentiellement une unité laser et scanner 2 pour la génération d'un faisceau laser 3 à orienter en direction d'une poudre métallique, céramique ou céramo-métallique 5 disposée sur un plateau 8, sur lequel est placé initialement un substrat de base 7'. Le faisceau laser 3 est dirigé en direction de la poudre selon un tracé mémorisé du motif à réaliser. Par chauffage dû au faisceau laser 3 comme source d'énergie, une partie de la poudre métallique fond et s'agglutine ou se solidifie pour former une portion de structure 7 du motif à réaliser sur le substrat de base 7'.

Comme la fusion sélective de la poudre s'effectue normalement par couche, une fois que le faisceau laser 3 a balayé toute la surface de la poudre 5 selon le tracé défini, le plateau 8 peut descendre d'un cran. Une autre couche de poudre métallique 5 peut être poussée depuis un autre plateau 4 d'un réservoir de poudre par un ameneur de poudre ou dispositif de répartition de poudres, tel qu'un rouleau 6 ou un racleur au-dessus du plateau 8. Le faisceau laser 3 balaie à nouveau la nouvelle poudre amenée, afin d'agglutiner une partie de la poudre 5 sur la portion de structure 7 précédente. L'autre plateau 4 peut également monter d'un cran pour pouvoir amener une autre partie de poudre 5 en dehors du réservoir de poudre, afin d'être poussée par l'ameneur de poudre lors d'une étape successive.

Bien entendu, il peut aussi être envisagé d'effectuer une opération de fusion sélective (SLM) ou frittage sélectif au moyen d'un faisceau d'électrons en lieu et place d'un faisceau laser. Il peut également être utilisé une machine de fabrication additive d'une couche ou d'une superposition de couches métalliques et/ou céramiques et/ou céramo-métalliques permettant de créer des cloisons sandwichs métalliques ou céramiques ou céramo-métalliques, tel que cermets.

Il est à noter que, dans le cas d'une poudre métallique 5, celle-ci est déposée sous forme de fines couches, typiquement de l'ordre de 50 µm sur le substrat de base 7' de l'élément sur le plateau 8. Ces couches successives sont fondues sélectivement les unes après les autres pour former les cloisons métalliques complexes du motif désiré. La précision de la fusion sélective notamment par faisceau laser ou d'électrons s'étend de 0.1 mm à 0.02 mm selon la taille des particules et les conditions de la fusion sélective utilisées à savoir la vitesse de balayage et l'énergie du faisceau laser 3 ou d'électrons. Cela permet de rendre les décors de l'élément extrêmement précis.

Il est à noter que le frittage sélectif sur le substrat de base peut également être effectué avec des poudres en céramique ou cermet par exemple. Avec de la poudre céramique du type zircone stabilisée par yttrine par exemple, il peut y avoir un frittage sélectif par laser. Pour ce frittage sélectif, la poudre céramique peut comprendre un liant ou pas de liant, qui peut être un matériau polymère. Un type de liant peut être du polyméthacrylate de méthyle, polyvinyl butyral, méthyl-éthyle-cétone « MEK ». Pour de la poudre métallique, il n'est pas utilisé de liant, car la poudre irradiée fond et se solidifie par la suite.

En principe pour effectuer une fusion sélective ou frittage sélectif d'une poudre sur le substrat de base, il pourrait encore être réalisé au moins une couche intermédiaire sur ledit substrat de base pour assurer une bonne liaison de la poudre fusionnée ou frittée sur le matériau du substrat de base. Il pourrait être prévu initialement d'effectuer sur le substrat de base métallique une première couche d'émail, par exemple de couleur blanche ou transparente, sur laquelle il est effectué un frittage sélectif par laser ou faisceau d'électrons d'une poudre céramique ou céramo-métallique pour obtenir le moule ou les cloisons de décoration. Il peut aussi être prévu de déposer une ou plusieurs couches PVD ou galvaniques métalliques, qui peuvent servir de couche conductrice de base pour la croissance galvanique. Il peut aussi être prévu de faire fondre une brasure métallique à bas point de fusion en surface du substrat de base avant une opération de fusion sélective par laser ou faisceau d'électrons d'une poudre par exemple métallique. Une fois que les cloisons ou moule ont été réalisés et que le matériau de remplissage est inséré, il peut encore être prévu d'ajouter une couche supplémentaire de type métallique ou céramique ou céramo-métallique pour la réalisation d'un motif tridimensionnel.

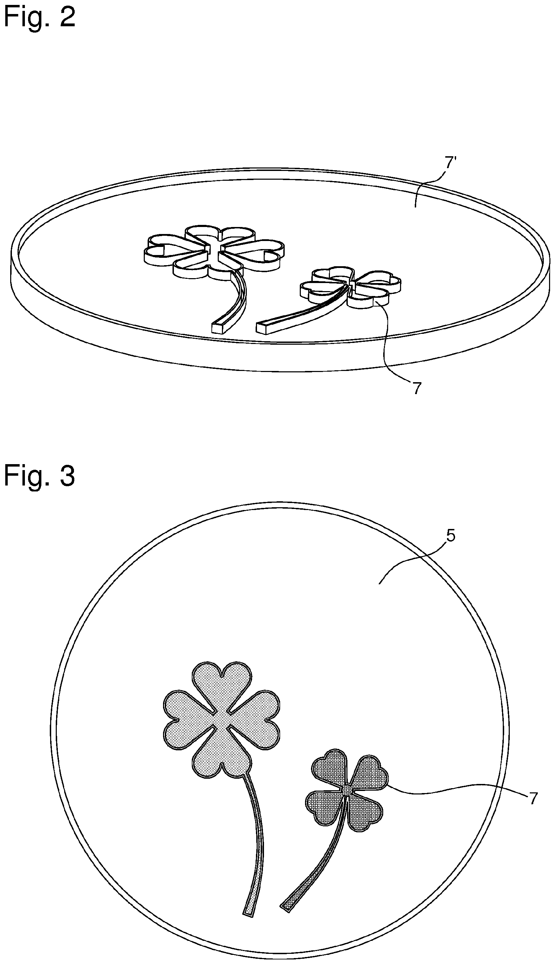

Une fois que le motif 7 est terminé, l'élément avec le motif peut être retiré de la machine de fusion sélective ou frittage sélectif 1 en retirant toute la poudre métallique non solidifiée autour de la structure de motif. Cet élément, par exemple sous forme de cadran de montre, est représenté avec son motif à la figure 2 en vue tridimensionnelle. De préférence pour les composants utilisant de l'émaillage à chaud, il peut être envisagé pour éviter l'oxydation lors de l'émaillage à chaud, de déposer une couche galvanique sur les cloisons ou le moule. Cette couche galvanique est composée d'un métal ou alliage métallique noble, tel que de l'or 24 carat, du platine fin, du rhodium fin, du palladium fin ou tout autre métal ou alliage métallique précieux.

Dès cet instant, une opération d'émaillage de l'élément avec les cloisons ou moule du motif réalisé, peut être effectuée. Pour ce faire, les espaces entre les cloisons sont remplis de substances vitreuses. Les matières premières de ces substances vitreuses sont principalement la silice, les feldspaths, les pegmatites, la craie, la chaux, et, parfois, des kaolins, associés à des composants métalliques pour lui donner sa couleur. Une fois les cloisons du motif de l'élément remplis des substances vitreuses, une cuisson au four s'opère par exemple à une température voisine de 800 °C pour les émaux, qui se fondent sur les objets métalliques. L'élément décoré sous forme de cadran est représenté à la figure 3.

Dès que l'opération d'émaillage est terminée, il peut encore être envisagé de supprimer le substrat de base, par exemple en métal ou en céramique ou céramo-métallique, voire également en matériau semi-conducteur par une opération d'usinage ou de dissolution sélective. L'élément décoré obtenu après le procédé comprend donc des portions d'émail entourées de la structure de motif.

Bien entendu il peut être envisagé après avoir terminé le motif 7 sur le substrat de base après l'opération de fusion sélective ou frittage sélectif, d'effectuer un remplissage des cloisons réalisées par un matériau de remplissage autre que de l'émail. Il peut être utilisé comme matériau de remplissage notamment un polymère thermodurcissable (type résine époxy), du métal, de la céramique ou autre matériau, qui est disposé dans les cloisons sous forme de poudre ou de liquide avant une opération de solidification ou consolidation ou polymérisation. Différentes couleurs du matériau de remplissage peuvent être choisies pour garnir les cloisons, afin de réaliser un élément décoré.

Une autre technique ne faisant pas partie de l'invention de réalisation de cloisons, parois ou moule sur un substrat de base d'un élément de montre ou de bijouterie peut encore être envisagée. II peut être utilisé un procédé du type LIGA (Lithographie, Galvanofomung und Abformung en terminologie allemande) pour réaliser les cloisons ou parois ou moule sur le substrat de base. Dans ce cas, le substrat de base est de préférence un substrat semi-conducteur, tel que du silicium, voire de l'arséniure de gallium, dont une couche supérieure peut être conductrice pour effectuer la galvanoplastie. Cependant il peut aussi être pris un substrat de base métallique, typiquement du cuivre, ce qui peut éviter de réaliser une couche conductrice en surface du substrat de base.

Une résine photosensible est déposée sur le substrat de base avec la couche conductrice sur sa partie supérieure. Cette résine photosensible peut être une résine à base de poly-imide PMMA (poly-méthyle méthacrylate) ou une résine à base d'époxy octofonctionnelle disponible chez Shell Chemical sous la référence SU-8 et d'un photo-initiateur choisi parmi les sels de triarylsulfonium. Cette résine peut être photo-polymérisée au moyen d'un rayonnement ultra-violet (UV). Cependant il peut aussi être imaginé d'avoir une résine sensible aux rayons X générés par un synchrotron, mais cette opération est trop onéreuse pour la réalisation du moule ou des cloisons sur le substrat de base.

Un masque au contour du motif à réaliser sur le substrat de base de l'élément est disposé sur la résine. Le masque peut être une plaque de verre sur laquelle est réalisée une couche de masquage avec des parties opaques et transparentes selon le motif à réaliser. Un rayonnement lumineux par exemple du type ultra-violet est dirigé sur le masque pour irradier des parties de la résine non masquées. Avec ce type de résine utilisée, qui est une résine photosensible négative, les parties non irradiées peuvent être retirées par des moyens physiques ou chimiques. Cela permet de définir les formes des cloisons ou moule dans les parties retirées de la résine.

Il est à noter qu'il peut aussi être utilisé une résine photosensible positive avec un masque avec une couche de masquage ayant des parties opaques et transparentes selon le motif à réaliser. Ce masque est l'inverse du masque utilisé avec la résine négative. Dans ce cas, ce sont les parties irradiées de la résine, qui sont retirées.

Par la suite, il est effectué une opération de galvanoplastie ou électrodéposition. Une croissance d'au moins un matériau métallique s'opère dans les parties ouvertes de la résine depuis la couche conductrice réalisée en surface du substrat de base. Une fois que l'épaisseur de la couche métallique déposée est suffisante pour définir le motif du décor souhaité, la résine peut être retirée. Une opération d'émaillage peut être effectuée directement après en insérant la ou les substances vitreuses dans les cloisons définies et les cuire au four. Cependant les cloisons peuvent aussi être remplies par un autre type de matériau de remplissage comme indiqué précédemment.

Il est à noter que les matériaux métalliques déposés par le procédé LIGA peuvent être des alliages de nickel ou nickel phosphore, ou encore des alliages à base de cuivre, or ou même des aciers. Il peut être utilisé en principe tout métal ou alliage métallique, ou même un métal amorphe, qui peut être déposé par un procédé galvanique.

Selon une technique assez similaire à celle décrite en référence au procédé LIGA et ne faisant pas partie de l'invention, il peut être imaginé au lieu d'effectuer une opération de galvanoplastie ou électrodéposition de réaliser une brasure à basse température dans les cloisons réalisées dans la résine. La brasure peut avantageusement être fixée directement sur le substrat de base, s'il est en matériau métallique, ou sur la couche conductrice en surface du substrat de base, telle qu'une couche métallique.

De préférence avec les différentes techniques de réalisation d'un motif décoratif sur l'élément, il est cherché de réaliser un élément décoré, tel qu'un cadran de montre. Pour la décoration du cadran de montre, il peut être prévu d'insérer un matériau de remplissage dans le moule ou les cloisons réalisés. Ce matériau de remplissage peut être un polymère thermodurcissable, un alliage métallique, une céramique, un cermet ou autre type de matériau de remplissage coloré. La fixation de ce type de matériau de remplissage dans les cloisons peut être opérée à température ambiante ou à une température, qui doit être inférieure au point de fusion du matériau des cloisons et du substrat de base. Si le matériau de remplissage est de l'émail, le cadran avec la substance vitreuse disposée dans les cloisons doit encore être cuit dans un four à assez haute température.

Il est encore à noter qu'à chaque étape de réalisation du procédé, il peut être prévu d'ajouter une couche intermédiaire d'accrochage par exemple sur le substrat de base pour la réalisation des cloisons ou moule. Par la suite, il peut encore être ajouté une autre couche d'accrochage sur les cloisons ou l'élément décoré avec le matériau de remplissage, afin d'ajouter une ou plusieurs autres couches décoratives par l'une des techniques citées ci-dessus. Une couche décorative peut être une couche métallique, céramique et/ou céramo-métallique obtenue par frittage sélectif ou fusion sélective d'une poudre (SLM) par laser ou faisceau d'électrons sur un émail transparent ou non pour former un ou plusieurs motifs bidimensionnels ou tridimensionnels dans la structure émaillée. Le substrat de base peut encore être creusé pour améliorer l'accroche mécanique du matériau de remplissage entre les cloisons.

Lors d'une opération de frittage sélectif ou fusion sélective, il peut être envisagé de combiner une poudre métallique et une poudre en céramique ou céramo-métallique. Il peut y avoir tout d'abord une première opération de fusion sélective avec de la poudre métallique, suivie après l'opération de remplissage du matériau de remplissage, d'une seconde opération de frittage sélectif avec de la poudre céramique ou céramo-métallique. Une ou plusieurs autres opérations de fusion sélective ou frittage sélectif d'une poudre sur les précédentes couches de l'élément peuvent être effectuées pour former une structure en sandwich. Ainsi un motif bidimensionnel ou tridimensionnel peut être réalisé sur le matériau de remplissage ou également sur les cloisons ou le moule par succession de couches de poudres fusionnées ou frittées. Bien entendu, il peut être utilisé de la poudre céramique ou céramo-métallique dans la première opération et la poudre métallique dans la seconde opération.

A partir de la description qui vient d'être faite, plusieurs variantes du procédé de réalisation d'un élément décoré d'une pièce d'horlogerie ou de bijouterie peuvent être conçues par l'homme du métier sans sortir du cadre de l'invention définie par les revendications. L'élément décoré peut être également un cadran de montre, une aiguille de montre, ou un disque de quantième, un autre composant de la montre, tel qu'une roue des secondes, une masse oscillante, un fond de boîte de montre.

## Revendications

1. Procédé de réalisation d'un élément décoré d'une pièce d'horlogerie ou de bijouterie, le procédé comprenant les étapes de :
- se munir d'un substrat de base (7'), et effectuer sur ledit substrat de base un micro-usinage d'un moule ou de cloisons décoratives (7) selon un motif programmé, et
- remplir le moule ou les cloisons décoratives d'au moins un matériau de remplissage (5) pour obtenir l'élément décoré,
**caractérisé en ce que** le moule ou les cloisons décoratives (7) sont obtenus par fusion sélective ou frittage sélectif d'une poudre (5) sur le substrat de base (7') dans une machine de fusion sélective ou frittage sélectif (1) au moyen d'un faisceau laser (3) ou d'un faisceau d'électrons ou dans une machine de fabrication additive d'une couche métallique, céramique ou céramo-métallique, tel que cermet, selon un tracé mémorisé du motif à réaliser.

2. Procédé de réalisation d'un élément décoré selon la revendication 1, **caractérisé en ce que** le moule ou les cloisons décoratives (7) sont remplis d'une substance vitreuse (5) pour une opération d'émaillage avec une cuisson de la substance vitreuse dans un four pour obtenir l'élément décoré.

3. Procédé de réalisation d'un élément décoré selon la revendication 1, **caractérisé en ce qu'**une fois que le moule ou les cloisons décoratives (7) sont remplis par le matériau de remplissage (5) solidifié et maintenu à des parois dudit moule ou desdites cloisons, il est effectué une opération d'usinage ou de dissolution sélective pour retirer le substrat de base, qui est en métal ou en céramique ou en céramo-métallique, tel que cermet.

4. Procédé de réalisation d'un élément décoré selon la revendication 1, caractérisé ce que ce le substrat de base est muni d'au moins une couche métallique et/ou céramique et/ou cermet pour améliorer son adhérence avec la poudre métallique et/ou céramique et/ou cermet lors de la fusion sélective ou frittage sélectif au moyen d'un faisceau laser (3) ou d'un faisceau d'électrons.

5. Procédé de réalisation d'un élément décoré selon la revendication 1, **caractérisé en ce que** le moule ou les cloisons décoratives (7) sont obtenus par fusion sélective ou frittage sélectif successive de plusieurs couches de poudre par le faisceau laser (3) ou faisceau d'électrons ou dans une machine de fabrication additive par superposition de couches métalliques ou céramiques ou cermets.

6. Procédé de réalisation d'un élément décoré selon la revendication 1, **caractérisé en ce qu'**une ou plusieurs opérations supplémentaires de fusion sélective ou frittage sélectif d'une ou plusieurs poudres par faisceau laser (3) ou faisceau d'électrons sont effectuées sur ou dans le matériau de remplissage et/ou sur les cloisons ou le moule pour obtenir une structure de décor bidimensionnelle ou tridimensionnelle.

7. Procédé de réalisation d'un élément décoré selon la revendication 1, **caractérisé en ce que** les cloisons ou le moule sont protégés d'une couche galvanique, qui est composée d'un métal ou alliage métallique noble pour éviter l'oxydation lors d'une opération d'émaillage à chaud.

8. Procédé de réalisation d'un élément décoré selon la revendication 1, **caractérisé en ce que** la poudre utilisée est de la poudre métallique.

9. Procédé de réalisation d'un élément décoré selon la revendication 1, **caractérisé en ce que** la poudre utilisée est de la poudre céramique avec ou sans liant.

10. Procédé de réalisation d'un élément décoré selon la revendication 1, **caractérisé en ce que** la poudre utilisée est de la poudre céramo-métallique, tel que cermet.

11. Elément décoré obtenu selon le procédé de réalisation selon l'une des revendications précédentes, **caractérisé en ce que** l'élément comprend un matériau de remplissage (5) maintenu à des parois d'un moule ou de cloisons décoratives (7) micro-usinés selon un motif programmé.

12. Elément décoré selon la revendication 11, **caractérisé en ce que** le moule ou les cloisons décoratives (7) sont réalisés en métal, et **en ce que** le matériau de remplissage (5) est de l'émail coloré, qui peut être différent d'une cloison à une autre cloison.

13. Elément décoré selon la revendication 11, **caractérisé en ce que** le moule ou les cloisons décoratives (7) sont réalisés en métal, et **en ce que** le matériau de remplissage (5) est un polymère thermodurcissable, un métal, un alliage métallique, une céramique ou un cermet de diverses couleurs d'une cloison à une autre cloison.

## Patentansprüche

1. Verfahren zur Herstellung eines Verzierungselements eines Uhrmacherei- oder Schmuckstücks, wobei das Verfahren folgende Schritte umfasst:
- Bereitstellen eines Auflagesubstrats (7') und Durchführen einer Mikro-Materialbearbeitung einer Gießform oder von verzierenden Trennwänden (7) auf dem Auflagesubstrat gemäß einem programmierten Motiv, und
- Füllen der Gießform oder der verzierenden Trennwände mit wenigstens einem Füllwerkstoff (5), um das Verzierungselement zu erhalten,
**dadurch gekennzeichnet, dass** die Gießform oder die verzierenden Trennwände (7) erhalten werden durch selektives Schmelzen oder selektives Sintern eines Pulvers (5) auf dem Auflagesubstrat (7') in einer Maschine zum selektiven Schmelzen oder selektiven Sintern (1) mittels eines Laserstrahls (3) oder eines Elektronenstrahls oder in einer Maschine zur additiven Fertigung einer Metall-, Keramik- oder Metallkeramikschicht, wie Cermet, gemäß einem gespeicherten Grundriss des herzustellenden Motivs.

2. Verfahren zur Herstellung eines Verzierungselements nach Anspruch 1, **dadurch gekennzeichnet, dass** die Gießform oder die verzierenden Trennwände (7) gefüllt sind mit einer glasartigen Substanz (5) für ein Emaillierungsverfahren mit Brennen der glasartigen Substanz in einem Ofen, um das Verzierungselement zu erhalten.

3. Verfahren zur Herstellung eines Verzierungselements nach Anspruch 1, **dadurch gekennzeichnet, dass**, sobald die Gießform oder die verzierenden Trennwände (7) mit dem verfestigten und an Wänden der Gießform oder der Trennwände festgehaltenen Füllwerkstoff (5) gefüllt sind, ein Verfahren zur Materialbearbeitung oder zur selektiven Auflösung ausgeführt wird, um das Auflagesubstrat zu entfernen, das aus Metall oder aus Keramik oder aus Metallkeramik, wie Cermet, hergestellt ist.

4. Verfahren zur Herstellung eines Verzierungselements nach Anspruch 1, **dadurch gekennzeichnet, dass** das Auflagesubstrat mit wenigstens einer Metall- und/oder Keramik- und/oder Cermetschicht versehen ist, um seine Adhäsion mit dem Metall- und/oder Keramik- und/oder Cermetpulver beim selektiven Schmelzen oder selektiven Sintern mittels eines Laserstrahls (3) oder eines Elektronenstrahls zu verbessern.

5. Verfahren zur Herstellung eines Verzierungselements nach Anspruch 1, **dadurch gekennzeichnet, dass** die Gießform oder die verzierenden Trennwände (7) durch aufeinanderfolgendes selektives Schmelzen oder selektives Sintern mehrerer Pulverschichten mittels Laserstrahl (3) oder Elektronenstrahl erhalten werden oder in einer Maschine zur additiven Fertigung durch Überlagerung von Metall- oder Keramik- oder Cermetschichten.

6. Verfahren zur Herstellung eines Verzierungselements nach Anspruch 1, **dadurch gekennzeichnet, dass** ein oder mehrere zusätzliche Verfahren zum selektiven Schmelzen oder selektiven Sintern eines oder mehrerer Pulver mittels Laserstrahl (3) oder Elektronenstrahl auf oder in dem Füllwerkstoff und/oder auf den Trennwänden oder der Gießform durchgeführt werden, um eine zweidimensionale oder dreidimensionale Verzierungsstruktur zu erhalten.

7. Verfahren zur Herstellung eines Verzierungselements nach Anspruch 1, **dadurch gekennzeichnet, dass** die Trennwände oder die Gießform geschützt werden von einer galvanischen Schicht, die aus einem Metall oder einer Edelmetalllegierung besteht, um die Oxidation bei einem Emaillierungsverfahren unter Hitze zu vermeiden.

8. Verfahren zur Herstellung eines Verzierungselements nach Anspruch 1, **dadurch gekennzeichnet, dass** das verwendete Pulver Metallpulver ist.

9. Verfahren zur Herstellung eines Verzierungselements nach Anspruch 1, **dadurch gekennzeichnet, dass** das verwendete Pulver Keramikpulver mit oder ohne Bindemittel ist.

10. Verfahren zur Herstellung eines Verzierungselements nach Anspruch 1, **dadurch gekennzeichnet, dass** das verwendete Pulver Metallkeramikpulver, wie Cermet, ist.

11. Verzierungselement, erhalten gemäß einem Herstellungsverfahren nach einem der vorstehenden Ansprüche, **dadurch gekennzeichnet, dass** das Element einen Füllwerkstoff (5) umfasst, der an Wänden einer Gießform oder von verzierenden Trennwänden (7) festgehalten wird, die gemäß einem programmierten Motiv feinstbearbeitet werden.

12. Verzierungselement nach Anspruch 11, **dadurch gekennzeichnet, dass** die Gießform oder die verzierenden Trennwände (7) aus Metall hergestellt sind, und dadurch, dass der Füllwerkstoff (5) farbiges Email ist, das von einer Trennwand zu einer anderen Trennwand verschieden sein kann.

13. Verzierungselement nach Anspruch 11, **dadurch gekennzeichnet, dass** die Gießform oder die verzierenden Trennwände (7) aus Metall hergestellt sind, und dadurch, dass der Füllwerkstoff (5) ein warmaushärtendes Polymer, ein Metall, eine Metalllegierung, eine Keramik oder ein Cermet unterschiedlicher Farben von einer Trennwand zu einer anderen Trennwand ist.

## Claims

1. Method for producing a decorated element for a timepiece or piece of jewellery, the method including the steps of:
- taking a base substrate (7'), and micromachining on said base substrate a mould or decorative partitions (7) in a programmed pattern, and
- filling the mould or decorative partitions with at least one filler material (5) to obtain the decorated element,
**characterised in that** the mould or the decorative partitions (7) are obtained by the selective melting or selective sintering of a powder (5) on the base substrate (7') in a selective melting or selective sintering machine (1) using a laser beam (3) or an electron beam or in an additive fabrication machine of a metal, ceramic or ceramo-metallic layer, such as cermet, along a stored line of the pattern to be created.

2. Method for producing a decorated element according to claim 1, **characterised in that** the mould or the decorative partitions (7) are filled with a vitreous substance (5) for an enamelling operation with firing the vitreous substance in a furnace to obtain the decorated element.

3. Method for producing a decorated element according to claim 1, **characterised in that** once the mould or the decorative partitions (7) are filled with the solidified filler material (5) held to walls of said mould or of said partitions, a machining or selective dissolution operation is performed to remove the base substrate, which is metal or ceramic or ceramo-metallic, such as cermet.

4. Method for producing a decorated element according to claim 1, **characterised in that** the base substrate is provided with at least one metal and/or ceramic and/or cermet layer to improve the adherence thereof to the metal and/or ceramic and/or cermet powder during the selective melting or selective sintering using a laser beam (3) or an electron beam.

5. Method for producing a decorated element according to claim 1, **characterised in that** the mould or the decorative partitions (7) are obtained by the successive selective laser beam (3) or electron beam melting or sintering of several powder layers or in an additive fabrication machine by superposition of metal or ceramic or cermet layers.

6. Method for producing a decorated element according to claim 1, **characterised in that** one or more additional selective laser beam (3) or electron beam melting or sintering operations are performed on or in the filler material and/or on the partitions or the mould to obtain a two-dimensional or three-dimensional decoration structure.

7. Method for producing a decorated element according to claim 1, **characterised in that** the partitions or the mould are protected by a galvanic layer, which is composed of a noble metal or metal alloy to prevent oxidation during a hot enamelling operation.

8. Method for producing a decorated element according to claim 1, **characterised in that** the powder used is metal powder.

9. Method for producing a decorated element according to claim 1, **characterised in that** the powder used is ceramic powder with or without a binder.

10. Method for producing a decorated element according to claim 1, **characterised in that** the powder used is ceramo-metallic powder, such as cermet.

11. Decorated element obtained by the production method according to any of the preceding claims, **characterised in that** the element includes a filler material (5) held to walls of a mould or decorative partitions (7) micromachined in a programmed pattern.

12. Decorated element according to claim 11, **characterised in that** the mould or the decorative partitions (7) are made of metal, and **in that** the filler material (5) is coloured enamel, which may be different from one partition to the next.

13. Decorated element according to claim 11, **characterised in that** the mould or the decorative partitions (7) are made of metal, and **in that** the filler material (5) is a thermo-hardening polymer, a metal, a metal alloy, a ceramic or a cermet of various colours from one partition to the next.
